## Europäisches Patentamt
## European Patent Office
## Office européen des brevets

(11) Veröffentlichungsnummer: **0 500 971 B1**

# EUROPÄISCHE PATENTSCHRIFT

(45) Veröffentlichungstag der Patentschrift: **11.01.95**

(51) Int. Cl.[6]: **G01G 19/04**, G01G 19/02

(21) Anmeldenummer: **91102743.1**

(22) Anmeldetag: **25.02.91**

(54) **Wägeverfahren.**

(43) Veröffentlichungstag der Anmeldung:
**02.09.92 Patentblatt 92/36**

(45) Bekanntmachung des Hinweises auf die
Patenterteilung:
**11.01.95 Patentblatt 95/02**

(84) Benannte Vertragsstaaten:
**BE DE ES FR IT NL**

(56) Entgegenhaltungen:
**EP-A- 0 226 491
DE-A- 3 805 272
US-A- 3 439 524
US-A- 3 835 945**

(73) Patentinhaber: **CARL SCHENCK AG**

**D-64273 Darmstadt (DE)**

(72) Erfinder: **Rettig, Manfred
Bordenbergweg 16
W-6109 Mühltal (DE)**

(74) Vertreter: **Brandt, Ernst-Ulrich, Dipl.-Phys.,
Dipl.-Ing.
Carl Schenck AG
Patentabteilung
D-64273 Darmstadt (DE)**

Rank Xerox (UK) Business Services
(3.10/3.09/3.3.3)

## Beschreibung

Die Erfindung betrifft ein Wägeverfahren nach dem Oberbegriff des Anspruches 1. Aus der EP 101 247 B1 ist ein Kalibrierverfahren für Plattformwaagen bekannt, bei welchem der Einfluß des Lastangriffspunktes eliminiert werden soll. Dabei wird eine Last nacheinander an verschiedenen Stellen der Plattform angesetzt und es wird jedesmal die Lastanzeige der Plattformwaage registriert.

Anschließend werden durch Manipulationen an Kompensationswiderständen die Empfindlichkeiten der einzelnen Kraftmeßdosen aneinander angeglichen. Dies stellt ein aufwendiges und enorm zeitintensives Vorgehen dar; zumal der Kalibriervorgang regelmäßig wiederholt werden muß.

Der Erfindung liegt daher die Aufgabe zugrunde, ein gattungsgemäßes Verfahren zum Messen von Lasten zu schaffen, welches ein genaues Wägen innerhalb des gesamten Bereichs der Meßstrecke gestattet und eine Kalibrierung in kürzester Zeit und mit geringem Aufwand ermöglicht.

Diese Aufgabe wird erfindungsgemäß durch die kennzeichnenden Merkmale des Anspruches 1 gelöst. Das erfindungsgemäße Wägeverfahren eignet sich insbesondere zum Wägen von Schienenfahrzeugen, jedoch bietet es auch enorme Vorteile beim Eckenlastausgleich von Plattformwaagen und beim Verwägen von Straßenfahrzeugen, bei welchem zwar das genaue Positionieren mit geringerem Aufwand verbunden ist, das neue Wägeverfahren jedoch eine deutliche Zeiteinsparung während des Kalibriervorganges bringt.

Die Installationszeit einer Wägevorrichtung besitzt bei der Anordnung in Gleisanlagen besondere Priorität, da die Beeinträchtigung des Betriebs in diesem Anwendungsfall gravierend ist. Daher sieht eine bevorzugte Verfahrensanwendung vor, daß die Meßstellen durch direkt applizierte Dehnungsmeßstreifen an einer Wägeschiene ausgebildet sind.

Aus der DE-OS 32 10 410 ist ein Verfahren zum Wägen mittels Wägeschiene bekannt. Hierbei werden durch Ermittlung von Biegespannungen an einem nichtunterstützten Schienenabschnitt die Radlasten bestimmt. Mit dem bekannten Verfahren kann eine befriedigende Meßgenauigkeit nur in einem sehr begrenzten Meßstreckenabschnitt erreicht werden. Daher ist bei dem bekannten Verfahren auch ein elektromechanischer Melder vorgesehen, welcher eine Messung nur dann zuläßt, wenn sich das Rad exakt auf dieser kurzen Meßstrecke befindet. Das durch die kurze Meßstrecke bedingte genaue Positionieren des zu wägenden Fahrzeuges ist meist mit einem hohen Zeitaufwand verbunden, sodaß mit dem bekannten Verfahren ein schnelles und wirtschaftliches Wägen nicht möglich ist. Ein weiterer Nachteil des bekannten Verfahrens liegt darin, daß durch die Messung von Biegespannungen die Meßgenauigkeit auch noch in starkem Maße von den Einspannbedingungen der Schiene abhängt, welche nur mit sehr hohem Aufwand konstant gehalten werden können.

Dadurch, daß die Dehnungsmeßstreifen in der neutralen Faser der Schiene angeordnet sind und die Hauptwirkungsrichtung der Dehnungsmeßstreifen im Winkel von 45° zu dieser Faser verlaufen, entfallen die störenden Einflüsse der Lagerbedingungen der Meßstelle auf den benachbarten Schwellen, da im Gegensatz zum oben beschriebenen Stand der Technik die Meßsignale nicht durch die aus den Biegespannungen resultierenden Dehnungen, sondern durch Dehnungen aufgrund von Schubspannungen, die durch die Querkräfte hervorgerufen werden, erzeugt werden.

Zwar ist aus der DE-OS 32 26 740 eine Wägeschiene bekannt, bei welcher ein Dehnungsmeßstreifen in Höhe der neutralen Faser angeordnet ist, jedoch ist dieser senkrecht zur neutralen Faser angeordnet. Der Dehnungsmeßstreifen registriert somit Stauchungen, die unmittelbar aus der Normalkraft resultieren, und das Meßsignal wird somit nicht von den Auflagerbedingungen der Schiene beeinflußt, jedoch ist bei dieser Anordnung nachteilig, daß die Meßstrecke praktisch der Breite des Dehnungsmeßstreifens entspricht. Somit ist lediglich das Wägen eines fahrenden Waggons möglich. Es steht somit nur ein sehr kurzer Zeitraum zum registrieren des Meßsignals zur Verfügung. Da durch die Rollbewegung des zu wägenden Waggons den Meßsignalen Schwingungen überlagert sind, kann das aufgrund des Meßsignals ermittelte Gewicht sehr stark vom tatsächlichen Gewicht abweichen.

Ein solch genaues Positionieren eines Waggons, um ihn im ruhenden Zustand zu wägen ist bei diesen kurzen Meßstrecken in der Praxis ausgeschlossen. Das gilt in verstärktem Maße dann, wenn aufgrund einer Verwindung des Fahrwerks eine diagonale Versetzung der Radaufstandsflächen zwischen der linken und der rechten Spur gegeben ist. Gerade ein solcher Fall wird jedoch durch die vorliegende Erfindung beherrschbar, wenn - wie es bei einer bevorzugten Ausführungsform der Erfindung vorgesehen ist - die einzelnen Meßsignale der linken und der rechten Spur bzw. Schiene jeweils getrennt erfaßt und ausgewertet werden.

Besitzen die Dehnungsmeßstreifen zwei Hauptwirkungsrichtungen bzw. werden zwei Dehnungsmeßstreifen so zusammengesetzt, daß die eine im negativen und die andere im positiven 45° Winkel zur neutralen Faser verläuft, so lassen sich jeweils der bzw. die Dehnungsmeßstreifen der Schieneninnenseite und der Schienenaußenseite einer Meßstelle zu einer Wheatstoneschen Vollbrücke verschalten. Damit läßt sich durch die gegensinnige Belastung (Dehnung des einen Astes, Stauchung des anderen) eine Verstärkung des Meßsignals (d. h. der Brückenverstimmung) erreichen. Außerdem lassen sich auf besonders einfache Weise Einflüsse, die aus einer Torsion der Schiene um ihre Längsachse resultieren, kompensieren.

Weitere vorteilhafte Merkmale, sowie die Funktion der Erfindung ergeben sich aus der nachstehenden Beschreibung einer bevorzugten Ausführung anhand der Zeichnung. Da die Vorteile der Erfindung im Falle der Verwendung an einer Wägeschiene am deutlichsten werden, ist diese Anwendung beispielhaft erläutert. Hierzu zeigt Figur 1 die Seitenansicht einer Meßstelle, die an einer Schiene ausgebildet ist, Figur 2 den Signalverlauf der Kraftsensoren in Abhängigkeit vom Krafteinleitungsort; Figur 3 zeigt eine Ausführungsform eines Dehnungsmeßstreifens, Figur 4 zeigt die Verschaltung eines Kraftsensors und Figur 5 die schematische Darstellung einer Draufsicht auf eine Wägestrecke mit 4 Meßstellen.

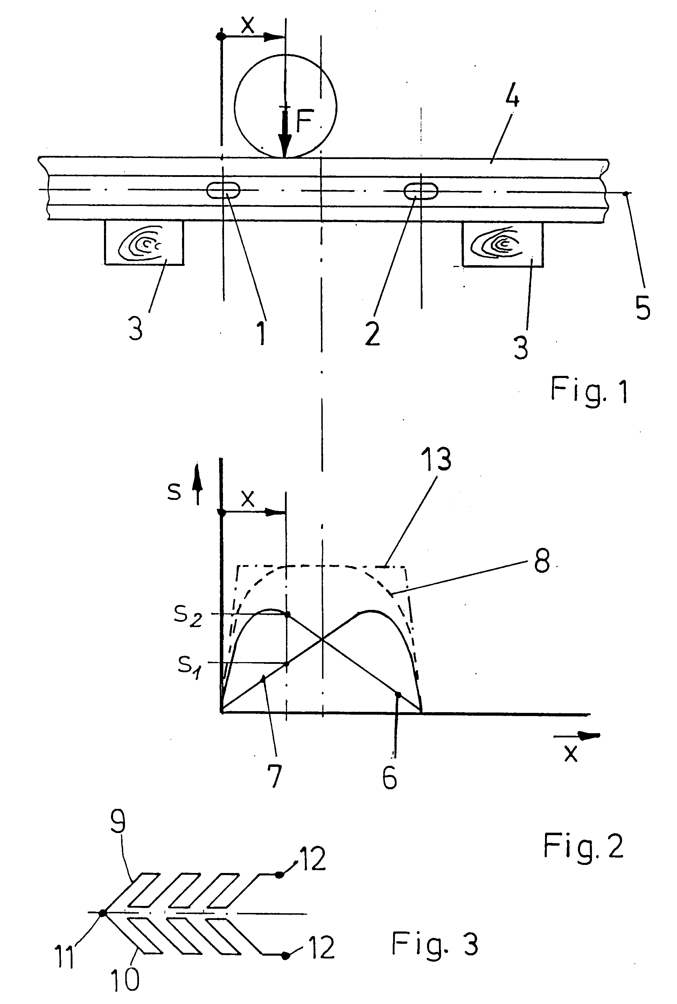

Die Meßstelle gemäß Figur 1 setzt sich aus einem ersten und einem zweiten Kraftsensor 1 bzw. 2 zusammen, welche innerhalb eines durch zwei Schwellen 3 begrenzten Abschnittes einer Schiene 4 vorgesehen sind. Die Kraftsensoren 1,2 sind als Dehnungsmeßstreifen ausgebildet, welche am Steg der Schiene 4 in Höhe der neutralen Faser 5 appliziert sind. Die Hauptwirkungsrichtung der Dehnungsmeßstreifen verläuft in einem 45° Winkel zur neutralen Faser, sodaß das Meßsignal der Dehnungsmeßstreifen proportional zur Schubspannung ist, welche durch eine auf die Schiene 4 aufgebrachte Querkraft erzeugt wird. Jeder Kraftsensor setzt sich aus zwei Dehnungsmeßstreifenanordnungen zusammen, wobei eine Anordnung auf der Außenseite und eine Anordnung auf der Innenseite der Schiene vorgesehen ist. Durch diese Maßnahme werden Verfälschungen des Meßsignals vermieden, welche von Dehnungen herrühren, die durch Torsionsbeanspruchung um die Längsachse der Schiene hervorgerufen werden.

Die von einem Kraftsensor detektierte Schubspannung hängt sehr stark vom Ort der Krafteinleitung ab. Zur Verdeutlichung ist hierzu in Figur 2 das Ausgangssignal des ersten Kraftsensors 1 - dies entspricht der Kurve 6 - und des zweiten Kraftsensors 2 - entspricht der Kurve 7 - in Abhängigkeit von dem Krafteinleitungsort X dargestellt. Die gestrichelte Linie 8 entspricht der Summe beider Signale und ist somit ein Maß für die innerhalb der Meßstrecke zwischen den beiden Kraftsensoren angreifende Radlast. Wie anhand der gestrichelten Linie 8 in Figur 2 gut zu erkennen ist, ist die Meßempfindlichkeit der Meßstelle nur dann befriedigend konstant, solange sich die angreifende Radlast im mittleren Bereich zwischen den beiden Kraftsensoren 1,2 befindet.

Um den gesamten Bereich zwischen den beiden Kraftsensoren zur Wägung benutzen zu können, ist nach dem erfindungsgemäßen Verfahren vorgesehen, daß zunächst durch Überrollen der gesamten Meßstrecke mit einer bekannten Radlast der Verlauf des Ausgangssignals der Kraftsensoren 1 und 2 in Abhängigkeit vom Ort der Krafteinleitung aufgenommen wird. Dem durch Aufsummieren der Meßsignale der beiden Kraftsensoren 1 und 2 gewonnenen Gewichtssignal (gestrichelte Kurve 8) kann nun in Abhängigkeit vom Krafteinleitungsort ein Korrekturfaktor zugeordnet werden, der die Empfindlichkeitsänderung in den Randzonen des Meßbereichs kompensiert und den in Fig. 2 dargestellten Kurvenverlauf 13 erzeugt.

Die nicht dargestellte elektronische Auswerteeinheit, der die Signale der Kraftsensoren 1 und 2 zugeführt werden, weist eine Speichereinrichtung auf, in welcher die ortsabhängigen Korrekturfaktoren abgespeichert werden. Durch eine einfache Divisionsschaltung, in welcher das Verhältnis zwischen dem Signal des ersten Kraftsensors und der Summe der beiden Kraftsensoren gebildet wird, ist die Auswerteeinrichtung in der Lage, aufgrund der ihr zugeführten Sensorsignale den Ort x der Krafteinleitung zu ermitteln.

Dies geschieht mittels der Beziehung

$$x = \frac{S_2 \cdot L}{S_1 + S_2}$$

worin $S_1$ und $S_2$ die Meßsignale des ersten bzw. zweiten Kraftsensors sind und die Konstante L den Abstand zwischen den beiden Kraftsensoren bezeichnet.

Mittels dieser Ortsinformation wird nun der entsprechende Korrekturfaktor bestimmt und mit dem Gewichtssignal verknüpft.

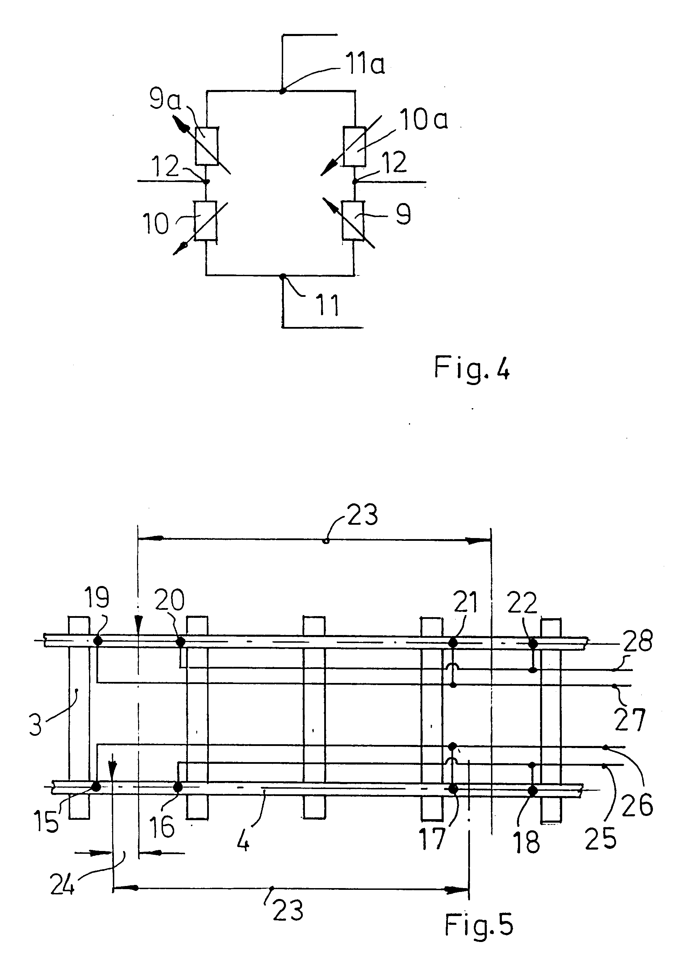

Ein Kraftsensor setzt sich aus zwei Dehnungsmeßstreifen gemäß Fig. 3 zusammen, wobei ein Dehnungsmeßstreifen auf der Schieneninnen- und ein Dehnungsmeßstreifen auf der Schienenaußenseite appliziert ist. Der symmetrische Dehnungsmeßstreifen weist zwei mäanderförmige Bereiche 9,10 auf, wobei die Hauptwirkungsrichtungen der beiden Bereiche 9,10 senkrecht aufeinanderstehen. Im Ausführungsbeispiel weist die Hauptwirkungsrichtung des ersten Bereiches 9 einen Winkel von + 45° zur Symmetrielinie auf, während die Hauptwirkungsrichtung des zweiten Bereiches 10 im Winkel von - 45° zur Symmetrieachse verläuft. Die Dehnungsmeßstreifen werden derart auf der Schiene appliziert, daß ihre Symmetrielinien entlang der neutralen Faser der Schiene verlaufen. Die beiden Dehnungsmeßstreifen eines Kraftsensors werden wie in Fig. 4 dargestellt zu einer Vollbrücke zusammengeschaltet.

Hierzu werden die beiden Anschlußpunkte 12 des an der Schienenaußenseite applizierten Dehnungsmeßstreifens mit den entsprechenden Anschlußstellen 12 des auf der Schieneninnenseite angeordneten Dehnungsmeßstreifens verbunden. Über die Anschlußpunkte 11 und 11a wird die Brückenspeisespannung angelegt; an den Anschlußpunkten 12 wird die Brückenausgangsspannung abgegriffen. Bei der Verschaltung ist darauf zu achten, daß der erste mäanderförmige Bereich 9 des auf der Schienenaußenseite applizierten Dehnungsmeßstreifens, welcher durch die Einleitung einer Querkraft zwischen zwei Kraftsensoren 1,2 gedehnt wird, einem zweiten Bereich 10a des auf der Schieneninnenseite applizierten Dehnungsmeßstreifens zugeordnet ist, welcher durch diese Belastung gestaucht wird. Entsprechend wird der gestauchte zweite Bereich 10 der Schienenaußenseite mit dem zu dehnenden Bereich 9a der Schieneninnenseite verbunden.

Fig. 5 zeigt eine Wägeanlage mit acht Kraftsensoren 15 bis 22, wobei die Kraftsensoren 15 bis 18 und 19 bis 22 jeweils hintereinander auf einer Schiene angeordnet sind. Die zwei Kraftsensoren 15 und 16, 17 und 18, 19 und 20 sowie 21 und 22 bilden jeweils eine Meßstelle. Es ist vorgesehen, daß sich jeweils zwei Meßstellen genau gegenüberliegen, wobei der Abstand zweier Meßstellen in Längsrichtung exakt dem Achsabstand 23 des zu wägenden Waggons entspricht.

Bei überbreiten Waggons, insbesondere bei Koksfüllfahrzeugen, welche über den beträchtlichen Radstand von ca. 6 Metern verfügen, können diagonale Verschiebungen 24 der Räder der linken Fahrzeugseite gegenüber denen der rechten Fahrzeugseite auftreten, welche Größenordnungen erreichen, die eine exakte Wägung erschweren. Um auch unter diesen schwierigen Bedingungen eine exakte Wägung durchführen zu können, ist vorgesehen, daß die Signale der Kraftsensoren 15 und 17 (das sind in der Zeichnung jeweils die linken Kraftsensoren der unteren Schiene) zusammengefaßt über die Verbindung 25 einem Kanal der Auswerteeinrichtung zugeführt werden, während die jeweils rechten Kraftsensoren 16 und 18 der unteren Schiene ihre Meßsignale über die gemeinsame Verbindung 26 einem separaten Eingang der Auswerteeinrichtung zuführen. Entsprechendes gilt bei der gemäß Fig. 5 oberen Schiene für die Kraftsensoren 19 und 21 sowie 20 und 22, welche über die Leitungen 27,28 an einen dritten bzw. vierten Eingangskanal angeschlossen sind. Durch diese Maßnahme kann für jede Schiene der Krafteinleitungsort der Radlast separat bestimmt werden und das Meßsignal entsprechend korrigiert werden.

Ist eine diagonale Verschiebung 24 nicht zu erwarten, so können die Meßsignale der jeweils linken Kraftsensoren 15,19,17 und 21 zusammengefaßt und einem ersten Eingangskanal der Auswerteeinrichtung zugeführt werden, während ein zweiter Eingangskanal mit den jeweils rechten Kraftsensoren 16,20,18 und 22 verbunden ist.

Mit dem erfindungsgemäßen Wägeverfahren lassen sich sowohl statische wie dynamische, achsweise oder waggonweise Wägungen durchführen. Mit entsprechender Verschaltung und Auswertung, bei der jede Meßstelle separat erfaßt wird, lassen sich auch die Radlasten ermitteln.

## Patentansprüche

1. Wägeverfahren für eine Wägevorrichtung mit mindestens zwei voneinander beabstandet angeordneten, durch Kraftsensoren (1,2) gebildeten Meßstellen, die einem Lastaufnahmeteil (4) zugeordnet sind, wobei das Gewicht der Last durch Addition der Meßsignale der Kraftsensoren (1,2) ermittelt wird, dadurch gekennzeichnet, daß sukzessiv nahezu jeder Teilabschnitt des zur unmittelbaren Beaufschlagung durch die Last vorgesehenen Bereichs des Lastaufnahmeteils zunächst mit bekannter Belastung beaufschlagt und der Einfluß des Krafteinleitungsortes auf die Signale der Kraftsensoren (1,2) ermittelt wird, daß diesen Ortspunkten Korrekturfaktoren zugeordnet werden, welche den Einfluß des Krafteinleitungsortes auf die Meßsignale kompensieren, daß durch Verknüpfung und Auswertung der Meßsignale der Kraftsensoren während des Wägevorgangs der Ort der Krafteinleitung ermittelt und das Wägeergebnis mit Hilfe der vorgenannten Korrekturfaktoren korrigiert wird.

2. Verfahren nach Anspruch 1 zum Messen von Rad- und/oder Achslasten von Fahrzeugen, dadurch gekennzeichnet, daß die Meßstellen als direktapplizierte Dehnungsmeßstreifen an einer Wägeschiene (4) ausgebildet sind.

3. Verfahren nach Anspruch 2, dadurch gekennzeichnet, daß die Dehnungsmeßstreifen in Höhe der neutralen Faser (5) seitlich an der Schiene angeordnet sind.

4. Verfahren nach Anspruch 3, dadurch gekennzeichnet, daß die Hauptwirkungsrichtung der Dehnungsmeßstreifen im Winkel von 45° zur neutralen Faser (5) verläuft.

5. Verfahren nach Anspruch 3, dadurch gekennzeichnet, daß die Dehnungsmeßstreifen zwei Hauptwirkungsrichtungen besitzen, wobei die eine im negativen und die andere im positiven 45°-Winkel zur neutralen Faser verläuft.

**6.** Verfahren nach einem der vorhergehenden Ansprüche, dadurch gekennzeichnet, daß die Meßsignale der linken und der rechten Spur bzw. Schiene geweils getrennt erfaßt und ausgewertet werden.

**7.** Verfahren nach einem der vorhergehenden Ansprüche, dadurch gekennzeichnet, daß die Meßsignale jeder Meßstelle separat erfaßt und ausgewertet wird.

**8.** Verfahren nach einem der vorhergehenden Ansprüche, dadurch gekennzeichnet, daß die Meßsignale der Kraftsensoren einer elektronischen Auswerteinrichtung zugeführt werden, welche auch die Korrekturfaktoren ermittelt und speichert.

**Claims**

**1.** Weighing procedure for a system with at least two separately installed measuring points and formed by load sensors (1, 2) that are allocated to the load measuring device (4) where the amount of the load is determined by summation of the measuring signals from the load sensors (1, 2), characterized in that nearly each sectional range of the load measuring device provided for direct loading is successively charged by known load and the influence of the load input point on the signals from the load sensors (1, 2) is determined and that correction factors are allocated to these points to compensate the influence of the load input point on the measuring signals and that the load input point is determined by combination and evaluation of the measuring signals from the load sensors during the weighing procedure and that the result of weighing is corrected by using the correction factors mentioned before.

**2.** Procedure according to claim 1 for measurement of the wheel load and/or axle load of vehicles characterized in that the measuring points are designed as directly applied strain gauges on a weighing rail (4).

**3.** Procedure according to claim 2, characterized in that the strain gauges are arranged at the side of the rail (5) at level with the neutral fibre.

**4.** Procedure according to claim 3, characterized in that the main direction of the effect of the strain gauges runs at an angle of 45° to the neutral fibre (5).

**5.** Procedure according to claim 3, characterized in that the strain gauges are acting in two main directions, i. e. one in the negative and one in the positive angle of 45° to the neutral fibre.

**6.** Procedure according to one of the afore-mentioned claims, characterized in that the measuring signals from the left-hand and right-hand track or rail are measured and evaluated separately.

**7.** Procedure according to one of the afore-mentioned claims characterized in that the measuring signals from each measuring point are measured and evaluated separately.

**8.** Procedure according to one of the afore-mentioned claims characterized in that the measuring signals from the load sensors are transmitted to an electronic evaluation system that also determines and stores correction factors.

**Revendications**

**1.** Méthode de pesage pour un dispositif de pesage avec au moins deux points de mesure formés au moyen de capteurs de force (1, 2), disposés à distance l'un de l autre, associés à un partie de suspension de charge (4), le poids de la charge étant déterminé par addition des signaux de mesure des capteurs de force (1, 2), caractérisée en ce que successivement, à peu près chaque section partielle de la zone, prévue pour être sollicitée directement par la charge, de la partie de suspension de charge est tout d'abord sollicitée par une charge connue et l'influence du lieu de l'introduction de la force sur les signaux des capteurs de force (1, 2) est déterminée, en ce que des facteurs de correction sont associés à ces points repères et compensent l'influence de l'endroit de l'introduction de la force sur les signaux de mesure, en ce que, par combinaison et exploitation des signaux de mesure issus des capteurs de force, pendant l'application de la méthode de pesage, le lieu de l'introduction de la force est déterminé et le résultat du pesage est corrigé avec l'aide des facteurs de correction précités.

**2.** Méthode selon la revendication 1, pour mesurer des charges sur les roues et/ou essieux de véhicules, caractérisée en ce que les points de mesure sont réalisés sous forme jauges extensométriques, appliquées directement, sur un rail de pesage (4).

**3.** Méthode selon la revendication 2, caractérisée en ce que les jauges extensométriques sont disposées latéralement sur le rail, à hauteur de la fibre neutre (5).

**4.** Méthode selon la revendication 3, caractérisée en ce que la direction d'action principale des jauges extensométriques s'étend sous un angle de 45° par rapport à la fibre neutre (5).

**5.** Méthode selon la revendication 3, caractérisée en ce que les jauges extensométriques ont deux directions d'action principales la première orientée avec un angle de 45° négatif et l'autre avec un angle de 45° positif par rapport à la fibre neutre.

**6.** Méthode selon l'une des revendications précédentes caractérisée en ce que les signaux de mesure de la voie, ou du rail, gauche et droite sont respectivement appréhendés et exploités séparément.

**7.** Méthode selon l'une des revendications précédentes, caractérisée en ce que les signaux de mesure de chaque point de mesure sont appréhendés et exploités séparément.

**8.** Méthode selon l'une des revendications précédentes caractérisée en ce que les signaux de mesure des capteurs de force sont amenés à un dispositif d'évaluation électronique, qui détermine et stocke également les facteurs de correction.

Fig. 1

Fig. 2

Fig. 3

7

Fig. 4

Fig. 5